# EUROPEAN PATENT APPLICATION

(11) **EP 4 613 538 A1**
(43) Date of publication of application: **10.09.2025**
(21) Application number: 24161783.6
(22) Date of filing: 06.03.2024
(51) Int. Cl.: B60L 50/64, H01M 10/625, H01M 50/209, H01M 50/291

(54) **BATTERY SYSTEM WITH IMPROVED CELL SPACERS**

(71) Applicant: Samsung SDI Co., Ltd., Yongin-si, Gyeonggi-do 17084 (KR)
(72) Inventor: Ipek, Eymen, 8020 Graz (AT)
(74) Representative: Gulde & Partner

(57) **Abstract**

The present disclosure refers to a battery system (100, 100'), including a plurality of battery cells (12) arranged along an alignment axis, and a cell spacer (14, 14') disposed in each gap between adjacent ones of the battery cells (12), wherein the cell spacer (14, 14') includes a center portion (15) and border portions (16) adjoining the center portion (15), wherein the center portion (15) has a larger thickness than the adjoining border portions (16), wherein opposite outer surfaces of the cell spacer (14, 14') are arranged at the same distance but in opposite directions from a central plane, the central plane being perpendicular to the alignment axis and extending through the center portion (15) and border portions (16).

## Description

### Field of the Disclosure

The present disclosure relates to a battery system which, due to improved cell spacers, more securely distances and thermally isolates its battery cells. Further, the present invention relates to a vehicle including such a battery system.

### Technological Background

Recently, vehicles for transportation of goods and peoples have been developed that use electric power as a source for motion. Such an electric vehicle is an automobile that is propelled permanently or temporarily by an electric motor, using energy stored in rechargeable batteries. An electric vehicle may be solely powered by batteries (Battery Electric Vehicle BEV) or may include a combination of an electric motor and, for example, a conventional combustion engine (Plugin Hybrid Electric Vehicle PHEV). BEVs and PHEVs use high-capacity rechargeable batteries, which are designed to provide power for propulsion over sustained periods of time.

A single battery cell includes an electrode assembly including a positive electrode, a negative electrode, and a separator interposed between the electrodes. A solid or liquid electrolyte allows movement of ions during charging and discharging of the battery cell. The electrode assembly is located in a casing and electrode terminals, which are positioned on the outside of the casing, establish an electrically conductive connection to the electrodes. The shape of the casing may be, for example, cylindrical or rectangular.

A battery module is formed of a plurality of battery cells connected together in series or in parallel. That is, the battery module is formed by interconnecting the electrode terminals of the plurality of battery cells depending on a desired amount of power and in order to realize a high-power rechargeable battery.

Battery modules can be constructed either in a block design or in a modular design. In the block design each battery is coupled to a common current collector structure and a common battery management system and the unit thereof is arranged in a housing. In the modular design, pluralities of battery cells are connected together to form submodules and several submodules are connected together to form the battery module. In automotive applications, battery systems generally include a plurality of battery modules connected together in series to provide a desired voltage.

A battery pack is a set of any number of (for example identical) battery modules or single battery cells. The battery modules, respectively battery cells, may be configured in a series, parallel or a mixture of both to deliver the desired voltage, capacity, or power density. Components of battery packs include the individual battery modules, and the interconnects, which provide electrical conductivity between them.

To provide thermal control of the battery pack by a thermal management system is required to safely use the at least one battery module by efficiently emitting, discharging and/or dissipating heat generated from its rechargeable batteries. If the heat emission/discharge/dissipation is not sufficiently performed, temperature deviations occur between respective battery cells, which may cause that the battery module cannot generate a desired amount of power. In addition, an increase of the internal temperature can lead to abnormal reactions occurring therein and thus charging and discharging performance of the rechargeable deteriorates and the life-span of the rechargeable battery is shortened. Thus, cell cooling for effectively emitting/discharging/dissipating heat from the cells is required.

Exothermic decomposition of cell components may lead to a so-called thermal runaway. In general, thermal runaway describes a process that is accelerated by increased temperature, in turn releasing energy that further increases temperature. Thermal runaway occurs in situations where an increase in temperature changes the conditions in a way that causes a further increase in temperature, often leading to a destructive result. In rechargeable battery systems, thermal runaway is associated with strongly exothermic reactions that are accelerated by temperature rise. In thermal runaway, the battery cell temperature rises incredibly fast and the energy stored is released very suddenly. In extreme cases, thermal runaway can cause battery cells to explode and start fire. In minor cases, it can cause battery cells to be damaged beyond repair.

When a battery cell is heated above a critical temperature (typically above 150°C) it can transit into a thermal runaway. Generally, temperatures outside of the safe region on either the low or high side may lead to irreversible damage to the battery and therefore may possible trigger thermal runaway. Thermal runaway may also occur due to an internal or external short circuit of the battery or poor battery maintenance. For example, overcharging or rapid charging may lead to thermal runaway.

During thermal runaway, the failed battery cell may reach a temperature exceeding 700°C.

Further, large quantities of hot gas are ejected from inside of the failed battery cell through the venting opening of the cell housing into the battery pack. The main components of the vented gas are H₂, CO₂, CO, electrolyte vapor and other hydrocarbons. The vented gas is therefore burnable and potentially toxic. The vented gas also causes a gas-pressure increase inside the battery pack. In the worst case, the high temperatures lead to the process spreading to neighboring cells and fire in the battery pack. At this stage, the fire is hardly to extinguish.

A battery system usually includes multiple battery cells which are separated from one another via cell spacers. Such cell spacers are used to limit thermal conduction between adjacent battery cells, in particular between faulty and healthy battery cells e.g. during a thermal runaway. State of the art cell spacers are designed as simple uniform shapes, in particular as cuboid shapes with a rectangular cross-section, similar to the shape of the battery cells.

During their lifetime the battery cells of a battery system are charged and discharged numerous times, wherein the battery cells swell up, i.e. increase in thickness and thus volume, during charging and shrink, i.e. decrease in thickness and thus volume, during discharging. This kind of cyclic volume change is called cell breathing. Due to this cell breathing the cell spacers are deformed have their thickness reduced in particular in their middle section as this is usually where the adjacent battery cells exert the most pressure/force. As the cell spacers thin out, the distance between the adjacent battery cells may be reduced so that they can no longer sufficiently perform their purpose of limiting thermal conduction between adjacent battery cells. Also, the structural integrity of the battery system may be compromised as the cell spacers no longer sufficiently keep the battery cells in place.

It is thus an object of the present invention to overcome or reduce at least some of the drawbacks of the prior art and to provide a battery system wherein the battery cells sufficiently thermally isolated from each other over many breathing cycles thereby prolonging the time of life of the battery system.

### Summary of Invention

The invention is defined by the appended claims. The description that follows is subjected to this limitation. Any disclosure lying outside the scope of said claims is only intended for illustrative as well as comparative purposes.

According to an aspect of the present disclosure, a battery system is provided including a plurality of battery cells arranged along an alignment axis, and a cell spacer disposed in each gap between adjacent ones of the battery cells, wherein the cell spacer includes a center portion and border portions adjoining the center portion, wherein the center portion has a larger thickness than the adjoining border portions, wherein opposite outer surfaces of the cell spacer are arranged at the same distance but in opposite directions from a central plane, the central plane being perpendicular to the alignment axis and extending through the center portion and border portions.

According to an aspect of the present disclosure, the cell spacer has a mirror-symmetrical shape.

According to an aspect of the present disclosure, the thickness of the cell spacer decreases continuously from the center portion to each of the border portions.

According to an aspect of the present disclosure, the cell spacer has an elliptical cross-section.

According to an aspect of the present disclosure, the thickness of the cell spacer decreases in steps from the center portion to each of the border portions.

Yet another aspect of the present disclosure refers to an electric vehicle including the battery system according to any one of the preceding aspects.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1: is a schematic cross-sectional view of a battery system with a swollen battery cell according to prior art.
- Fig. 2: is a schematic cross-sectional view of a battery system with a deformed cell spacers according to prior art.
- Fig. 3: is a schematic perspective view of a cell spacer according to an embodiment of the present invention.
- Fig. 4: is a schematic cross-sectional view of a battery system with cell spacers shown in Fig. 3.
- Fig. 5: is a schematic cross-sectional view of a battery system with cell spacers according to another embodiment of present invention.
- Fig. 6: is a schematic cross-sectional view of the battery system shown in Fig. 4 or Fig. 5 at an end of life stage.

### Detailed Description of the invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

In the following description of embodiments of the present disclosure, the terms of a singular form may include plural forms unless the context clearly indicates otherwise.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one aspect of the present disclosure, a battery system is provided. The battery system includes a plurality of battery cells, in particular prismatic battery cells. The battery system may include a housing accommodating the battery cells. The battery cells within each battery pack may be interconnected via electrical connecting means, e.g. busbars, contacting respective electrode/cell terminals of the battery cells. The battery cells are arranged to form one or more battery packs, wherein in a battery pack the battery cells are electrically interconnected e.g. in a series and/or in parallel as explained above. Multiple of the battery cell within a battery pack may form a battery module. Two or more of the battery modules may be stacked to form cell stacks. The battery cells are preferably prismatic battery cells.

The battery cells are arranged along an alignment axis which means that the battery cells are aligned along the alignment axis. The battery cells may be stacked along said axis. Between two neighboring/adjacent battery cells a cell spacer is arranged. Thus, a cell spacer is disposed in each gap between adjacent ones of the battery cells. Thereby adjacent battery cells are separated from each other via a cell spacer. The battery system may include a plurality of battery cells and cell spacers, the battery cells and cell spacers being alternately arranged or stacked along the alignment direction. The battery system includes at least two battery cells and one cell spacer arranged in between the two battery cells. The cell spacer spaces apart or distances adjacent battery cells from each other. The cell spacer(s) hold the battery cells in place by keeping them at a predefined distance and limit thermal conduction between the battery cells, in particular during a thermal runaway of one of the battery cells.

According to the present invention, the cell spacer includes a center portion and adjoining border portions, wherein the center portion has a larger thickness than the adjoining border portions. In other, words, the center portion is thicker than the border portions. The center portion means a portion/section of the cell spacer that is arranged in the middle area of the cell spacer, the center portion to the sides transitioning into the border portions. When the battery system is mounted/installed in an electric vehicle, the border portions may consist of an upper border portion and a lower border portion. The thickness of the cell spacer denotes the extension of the cell spacer along the alignment axis, in particular the distance between two opposite outer surfaces of the cell spacer along the alignment axis. The opposite outer surfaces of the cell spacer are arranged at the same distance but in opposite directions from a central plane which is perpendicular to the alignment axis and which extends through the center portion and border portions plane in opposite directions. In other words, the cell spacer has two opposite outer surfaces of the cell spacer which are distanced from the central plane by a first distance but in opposite directions along the alignment axis such that a distance between the two opposite outer surfaces is two times the first distance. This distance between the two opposite outer surfaces is the thickness of the cell spacer. Thus, the distance from the central plane the outer surfaces are arranged at is larger at the central portion than at the border portions.

During a breathing cycle, the battery cells of the battery system swell up and thus exert a pressure/force onto the adjacent cell spacers, as explained above. As the battery cells usually exert a larger force or pressure at their center than at the edges, the center portion of the inventive cell spacer is compressed more than the border portions. As the cell spacers according to the invention are thicker at their center portion than at their border portions and because of the same distancing of the opposite outer surfaces from the central plane, the cell spacers more evenly distribute the forces received by the adjacent battery cells. The cell spacers according to the invention may therefore better withstand these forces.

Further, while the cell spacer according to the invention may get deformed by the swollen battery cells after a large number of breathing cycles, the cell spacer gets deformed into a more suitable shape than known cell spacers. Due to the more evenly distributed forces received by the adjacent battery cells, the cell cover is flattened. That is, the cell spacer is deformed such that material from the center portion is moved to the border portions such that the difference in thickness between the center portion and the border portions is at least partly compensated over time. After numerous breathing cycles the shape of the cell spacers according to the invention may be transformed to a shape that is rather cuboid with a rectangular cross-section similar to the above-discussed cell spacers. In this shape the cell spacers may still perform their intended purpose of distancing the battery cells and limiting thermal conduction between the battery cells as the deformed cell spacer contact the adjacent battery cells basically over their whole surface. Compared to known cell spacers, the contact area between the cell spacer and the adjacent battery cells is not reduced over time but possibly even enlarged. The cell spacer thus ensures that the distance between two adjacent/neighboring battery cells does not fall below a predefined minimum distance.

Thus, in summary, the battery system according to the invention allows for the cell spacers to sufficiently perform their intended purpose of distancing the battery cells and limiting thermal conduction between the battery cells even after numerous breathing cycles. Thus, with the cell spacers of the battery system according to the invention the battery cells are thermally isolated from each other over many breathing cycles, the cell spacers keeping a stable thermal resistance over the lifetime of the battery system. The time of life of the battery system may even be prolonged by these cell spacers.

According to an embodiment, the cell spacer has a mirror-symmetrical shape. That is, a mirror symmetry plane may exist for the cell spacer, wherein a reflection at this plane is a symmetry operation of the cell spacer. In other words, the cell spacer may be an object for which every point has a one-to-one mapping onto another point equidistant from and on opposite sides of a common plane, which is the mirror symmetry plane. The mirror symmetry plane is a plane perpendicular to the alignment axis. The mirror symmetry plane may be the central plane. When the cell spacer is mirror-symmetrical, the outer surface of the cell spacer is distanced the same amount from the mirror symmetry plane in opposite directions. Thus, there are at least two outer surfaces of the cell spacer which extend the same distance but in opposite directions from the central plane, i.e. the mirror symmetry plane, the plane being perpendicular to the alignment axis and extending through the center portion and border portions. The cell spacer of such a shape is particularly suited to maintain a sufficient distance between adjacent battery cells likely because the external pressure applied by the adjacent battery cells is uniformly distributed along the surface and inside the cell spacer.

According to an embodiment, the thickness of the cell spacer decreases continuously from the center portion to each of the border portions. As mentioned above, the thickness of the cell spacer is greatest at the center portion and smaller at the border portions. Thus, referring to an axis perpendicular to the alignment axis, the thickness of the cell spacer decreases the farther a distance along said perpendicular axis is from a center of the cell spacer. Decreasing continuously means a steady decrease, in particular without steps. In other words, the cell spacer becomes continuously thinner towards opposite ends. This results in a particularly stable shape of the cell spacer as the forces exerted by the adjacent battery cells may be particularly evenly distributed at the surface and inside the cell spacer. According to a respective embodiment, the cell spacer has an elliptical cross-section. The elliptical cross-section may be along the alignment direction. In other words, the cell spacer may have a biconvex shape. A cell spacer of such a shape is particularly stable and easy to manufacture.

According to an embodiment, the thickness of the cell spacer decreases in steps from the center portion to each of the border portions. As mentioned above, the thickness of the cell spacer is greatest at the center portion and smaller at the border portions. Thus, referring to an axis perpendicular to the alignment axis, the thickness of the cell spacer decreases the farther a distance along said perpendicular axis is from a center of the cell spacer. Decreasing continuously means a gradual decrease in multiple steps, e.g. in at least two or at least three steps. Thus, in contrast to a continuous decrease as explained above, the cell spacer of this embodiment becomes thinner towards the end in multiple steps. This alternative also results in a particularly stable shape of the cell spacer as the forces exerted by the adjacent battery cells may be particularly evenly distributed at the surface and inside the cell spacer.

The invention also pertains to an electric vehicle including a battery system according to the invention.

### Specific Embodiments

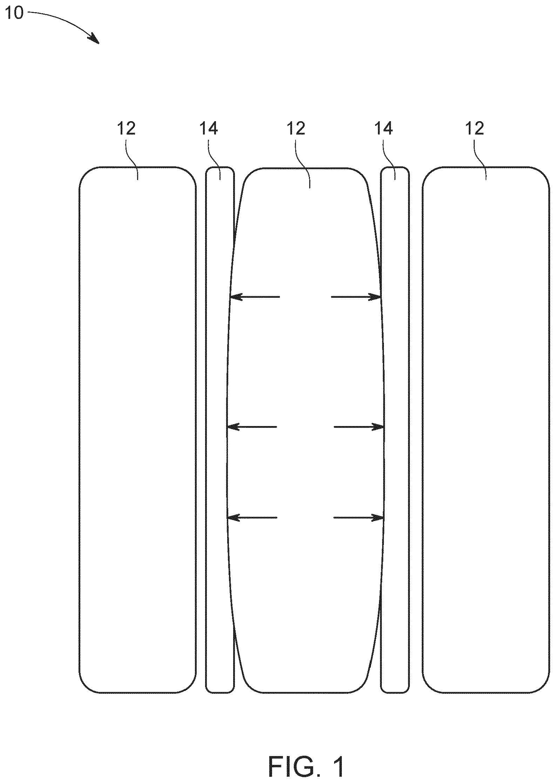

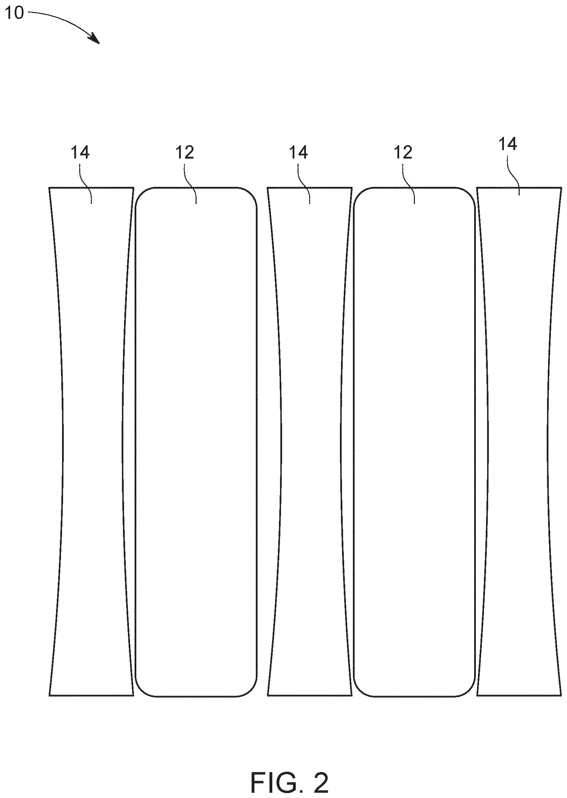

Fig. 1 and 2 illustrate a battery system 10 according to prior art. The battery system 10 includes multiple battery cells 12 and cell spacers 14 which are alternately arranged. The cell spacers 14 can provide a space between adjacent battery cells 12 distancing the battery cells 12 from each other and limiting thermal conduction between the battery cells 12. The cell spacers 14 may limit thermal propagation via conduction between a faulty battery cell, e.g. a battery cell experiencing a thermal runaway, and a healthy battery cell. The cell spacers 14 have a cuboid shape with a rectangular cross-section, as shown in the Fig. 1.

During their lifetime the battery cells 12 are charged and discharged numerous times, wherein the battery cells 12 swell up, i.e. increase in thickness and thus volume, during charging and shrink, i.e. decrease in thickness and thus volume, during discharging. This kind of cyclic volume change is called cell breathing. Fig. 1 shows the battery cell 12 in the middle of the battery system 10 in its swollen state, wherein the amount of increase in thickness is exaggerated for illustrative purposes. As indicated by the arrows, the swollen battery cell 12 exerts a force onto the adjacent cell spacers 14 on opposite sides of the swollen battery cell 12. The battery cells 12 generally swell up more at the center than at the edges.

As a result of the battery cells 12 swelling up, the cell spacers 14 get deformed over time as can be seen in Fig. 2 which shows the battery system 10 after numerous breathing cycles. With every breathing cycle the battery cells 12 compress the cell spacers 14 thereby reducing their thickness. As the battery cells 12 swell up more at the center than at the edges, the cell spacers 14 have a concave shape with a reduced thickness in the middle as shown in Fig. 2. These deformed cell spacers 14 can no longer sufficiently perform their intended purpose of distancing the battery cells 12 and limiting thermal conduction between the battery cells 12 which may prove disadvantageous for structural integrity of the battery system 10.

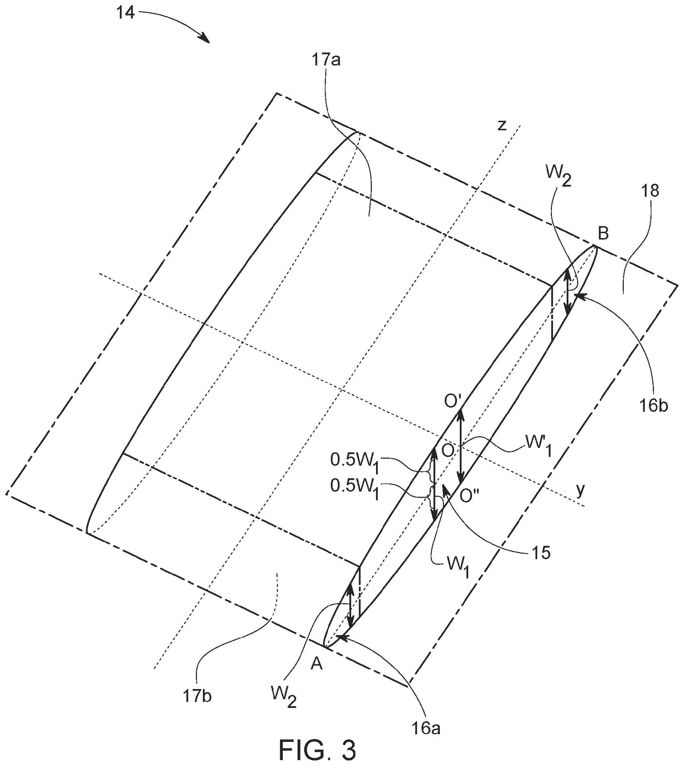

The present invention overcomes this problem with battery systems 100, 100' and cell spacers 14 shown in Fig. 3 to 5.

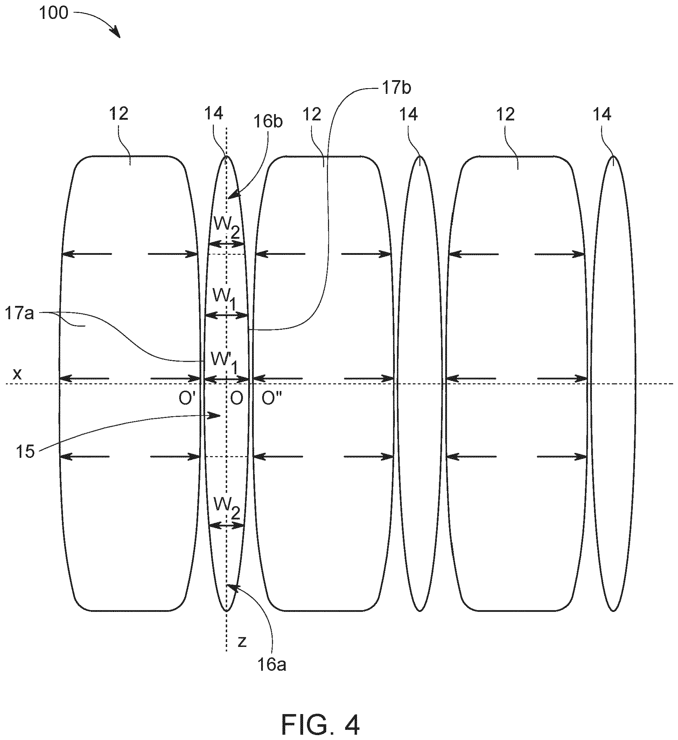

Fig. 3 and 4 pertain to an embodiment of a battery system 100 according to the present invention. The battery system 100 shown in Fig. 4 includes a plurality of prismatic battery cells 12 arranged along an alignment axis x, wherein a cell spacer 14 is disposed between adjacent ones of the battery cells 12. in other words, the battery cells 12 and cell spacers 14 are alternately stacked along the alignment axis x. The battery cells 12, while being of prismatic shape in their regular state, are shown in their swollen-up state due to cell breathing as shown in Fig. 4.

Fig. 3 schematically illustrates a perspective view of the cell spacers 14. Referring to Fig. 3 and 4, each cell spacer 14 has a mirror-symmetrical shape with a mirror symmetry plane that lies in the y-z-plane and cuts centrally through the cell spacer 14. Thus, the mirror symmetry plane is a central plane 18. Each cell spacer 14 includes a center portion 15, a lower border portion 16a and an upper border portion 16b adjoining the center portion 15, wherein the center portion 15 has a larger thickness w₁ than the thickness w₂ of the adjoining border portions 16. The central plane 18 extends through the center portion 15 and border portions 16 along the z-axis. In this embodiment, each cell spacer 14 has an elliptical cross-section, see Fig. 4, wherein the thickness of the cell spacer 14 decreases continuously (=steadily) from the center portion 15 having the thickness w₁, which is at its maximum value w₁' when the distance is from point O' to O" to each of the border portions 16, where the thickness is at a smaller value w₂, i.e. w₂ < w₁. And w₂ has a minimum value 0 at point A or B. The thickness denotes the extension of the cell spacer 14 along the alignment axis x. As the cell spacers 14 are mirror-symmetrical with respect to the central plane 18 (or y-z-plane), outer surfaces 17a, 17b of the cell spacer 14 are distanced the same amount from the central plane 18 but in opposite directions. Both the outer surfaces 17a, 17b may extend the same distance, i.e. the distance of 0.5w₁ at the center portion 15, from the mirror symmetry plane but in opposite directions along the alignment axis x. The ellipsoid shape of the cell spacers 14 is exaggerated for illustrative purposes.

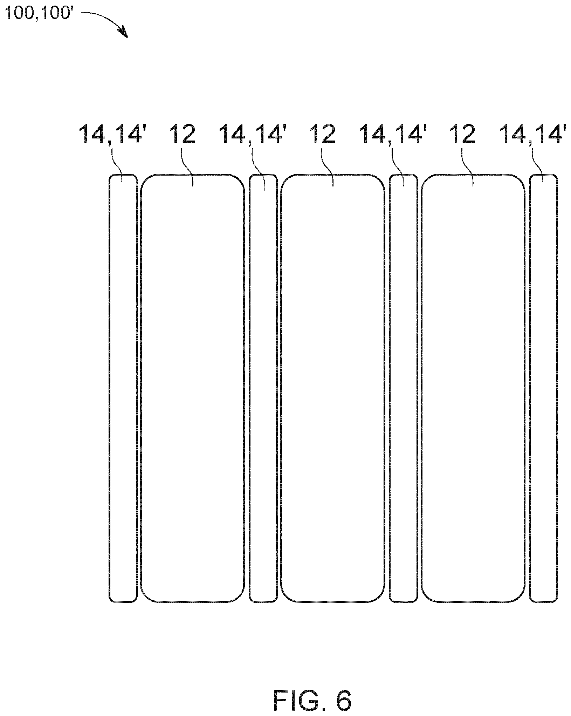

As mentioned, the battery cells 12 in Fig. 4 are shown in their swollen state. Here, the battery cells 12 exert pressure onto the adjacent cell spacers 14 as indicated by the arrows inside the battery cells 12. As a result, the cell spacers 14 are compressed and deformed. As the battery cells usually exert a larger force or pressure in their center than at the edges, a center portion 15 of a cell spacer 14 is compressed more than border portions 16a, 16b. As the cell spacers 14 are thickest at the center portion 15, i.e. where the adjacent battery cells 12 exert the most pressure, the cell spacers 14 are better suited to withstand these forces. Nevertheless, after numerous breathing cycles the cell spacers 14 may become flattened. The cell spacers 14 are thereby, after numerous breathing cycles, formed into a cuboid shape having a rectangular cross-section as shown in Fig. 6. In this cuboid shape the cell spacers 14 may still perform their intended purpose of distancing the battery cells 12 and limiting thermal conduction between the battery cells 12 as the deformed cell spacer 14 contact the adjacent battery cells basically over their whole surface. Even in this deformed shape the cell spacer 14 ensures that a predefined distance between two adjacent/neighboring battery cells 12 is maintained.

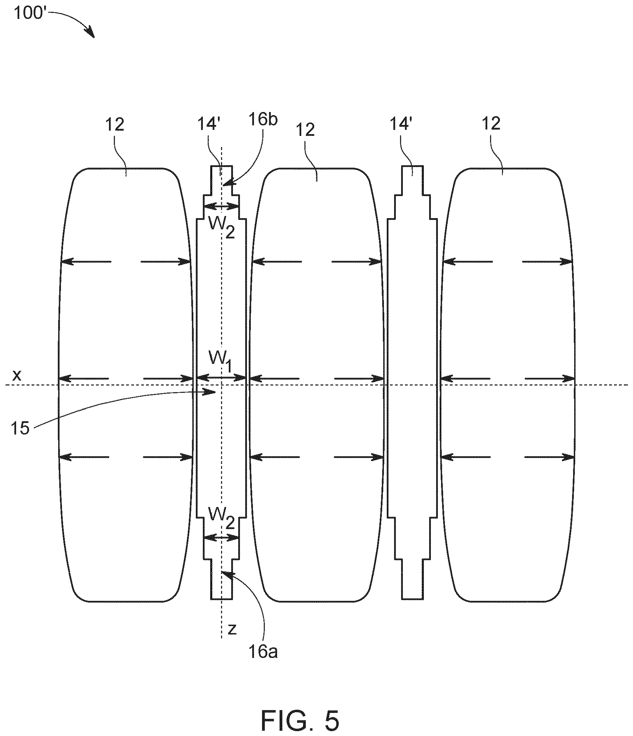

Fig. 5 pertains to another embodiment of a battery system 100' according to the present invention. The battery system 100' differs from the embodiment described above in the shape of the cell spacers. The battery system 100' includes a plurality of battery cells 12 arranged along an alignment axis x, wherein a cell spacer 14' is disposed between adjacent ones of the battery cells 12. The cell spacers 14' are also mirror-symmetrical with its mirror symmetry plane in the y-z-plane, i.e. the mirror symmetry plane is perpendicular to the x-axis and therefore the alignment axis. Also, the cell spacers 14' include a center portion 15 and border portions 16 adjoining the center portion 15, wherein the center portion 15 has a larger thickness w₁ than the thickness w₂ of the adjoining border portions 16.

In contrast to the embodiment shown in Fig. 4, the cell spacers 14' are not of an elliptical shape with a continuous decrease in thickness from the center portion to the border portions but instead the thickness of the cell spacers 14' decreases in steps (i.e. gradually) from the center portion 15 to each of the border portions 16. As shown in Fig. 5, the thickness is largest at the center portion 15 and decreases in at least one steps at the border portions 16.

Similar to the cell spacers of the first embodiment, the cell spacers 14' are getting compressed by the battery cells 12 when the battery cells 12 swell up as shown in Fig. 5. Such a stepped shape of cell spacers 14' may also be more suited to withstand the compression forces exerted by the battery cells 12. After numerous breathing cycles, however, the result is the same as with the cell spacers 14 having the elliptical cross-section, i.e. the cell spacers 14' are flattened and may, in the end, be formed into a cuboid shape having a rectangular cross-section as shown in Fig. 6.

Thus, providing mirror-symmetrical cell spacers 14, 14' which are thicker at their center portion 15 than at their border portions 16 allows for the cell spacers 14, 14' to sufficiently perform their intended purpose of distancing the battery cells 12 and limiting thermal conduction between the battery cells 12 even after numerous breathing cycles.

### Reference signs

- 10: known battery system
- 12: battery cells
- 14, 14': cell spacers
- 15: center portion of cell spacers
- 16: border portions of cell spacers
- 16a: lower border portion
- 16b: upper border portion
- 17a: outer surface
- 17b: outer surface
- 100: battery system according to invention
- 100': battery system according to invention

## Claims

1. A battery system (100, 100'), comprising a plurality of battery cells (12) arranged along an alignment axis, and a cell spacer (14, 14') disposed in each gap between adjacent ones of the battery cells (12), wherein the cell spacer (14, 14') comprises a center portion (15) and border portions (16) adjoining the center portion (15), wherein the center portion (15) has a larger thickness than the adjoining border portions (16), wherein opposite outer surfaces of the cell spacer (14, 14') are arranged at the same distance but in opposite directions from a central plane, the central plane being perpendicular to the alignment axis and extending through the center portion (15) and border portions (16).

2. The battery system (100, 100') according to claim 1, wherein the cell spacer (14, 14') has a mirror-symmetrical shape.

3. The battery system (100) according to claim 1 or 2, wherein the thickness of the cell spacer (14, 14') decreases continuously from the center portion (15) to each of the border portions (16).

4. The battery system (100) according to claim 3, wherein the cell spacer (14, 14') has an elliptical cross-section.

5. The battery system (100') according to claims 1 or 2, wherein the thickness of the cell spacer (14, 14') decreases in steps from the center portion (15) to each of the border portions (16).

6. An electric vehicle comprising the battery system (100, 100') according to any one of the preceding claims.

## Amended claims

### Amended claims in accordance with Rule 137(2) EPC.

1. A battery system (100, 100'), comprising a plurality of battery cells (12) arranged along an alignment axis, and a cell spacer (14, 14') disposed in each gap between adjacent ones of the battery cells (12), wherein the cell spacer (14, 14') comprises a center portion (15) and border portions (16) adjoining the center portion (15), wherein the center portion (15) has a larger thickness than the adjoining border portions (16), wherein opposite outer surfaces of the cell spacer (14, 14') are arranged at the same distance but in opposite directions from a central plane, the central plane being perpendicular to the alignment axis and extending through the center portion (15) and border portions (16), wherein the thickness of the cell spacer (14, 14') decreases continuously from the center portion (15) to each of the border portions (16), wherein the cell spacer (14, 14') has an elliptical cross-section.

2. The battery system (100, 100') according to claim 1, wherein the cell spacer (14, 14') has a mirror-symmetrical shape.

3. An electric vehicle comprising the battery system (100, 100') according to any one of the preceding claims.
